Europäisches Patentamt

European Patent Office

Office européen des brevets

(19)

(11) Publication number: **0 252 453 B1**

# EUROPEAN PATENT SPECIFICATION

(12)

(45) Date of publication of patent specification: **01.04.92**

(51) Int. Cl.⁵: **G01N 25/72**

(21) Application number: **87109626.9**

(22) Date of filing: **03.07.87**

(54) **Apparatus for monitoring of inspecting the thermal insulation of electric household appliances, particularly refridgerators.**

(30) Priority: **09.07.86 IT 4573586**

(43) Date of publication of application:
**13.01.88 Bulletin 88/02**

(45) Publication of the grant of the patent:
**01.04.92 Bulletin 92/14**

(84) Designated Contracting States:
**CH DE ES FR GB IT LI SE**

(56) References cited:
**EP-A- 0 084 374**
**FR-A- 2 554 762**
**US-A- 3 868 508**

**PATENT ABSTRACTS OF JAPAN, vol. 6, no. 13 (P-99)[891], 26th January 1982; & JP-A-56 138 243**

**PATENT ABSTRACTS OF JAPAN, vol. 10, no. 210 (P-479)[2266], 23rd July 1986; & JP-A-61 50 049**

(73) Proprietor: **INDUSTRIE ZANUSSI S.p.A.**
**Via Giardini Cattaneo 3**
**I-33170 Pordenone(IT)**

(72) Inventor: **Baggio, Dino**
**Via Lazio 18/6**
**I-33080 Porcia (Pordenone)(IT)**
Inventor: **Boscolo, Antonio**
**Via Angelo Emo 33/2**
**I-34144 Trieste(IT)**

(74) Representative: **Patentanwälte Grünecker, Kinkeldey, Stockmair & Partner**
**Maximilianstrasse 58**
**W-8000 München 22(DE)**

## Description

The present invention relates to apparatus for monitoring the thermal insulation of electric household appliances, particularly refrigerators, for immediately detecting in a simple manner any possible defects of the thermal insulation during the manufacture of such appliances.

At present the series production of electric household appliances such as refrigerators is initiated by providing the body of such appliances made of a metallic outer housing of substantially rectangular or cubic shape, with an open front face, and an inner plastic housing of conventional type, dimensioned to fit into the outer housing so as to define a space therebetween for the introduction of the thermal insulation.

The thus composed body is provided with suitable supports for the connection of a door to be used for closing the open front face of the body, said door being likewise of rectangular shape and having a metallic outer panel and a plastic inner panel positioned relative to one another so as to define a space therebetween for receiving the thermal insulation therein.

In practice all refrigerator doors are manufactured separate from the respective refrigerator bodies, the two components being separately conveyed by means of per se known devices on the conveyor belt of the assembly line, and subjected to a sequence of operations for installing the thermal insulation in the body and the door, followed by the door being mounted on the body and the remaining operative components of the refrigerator being installed therein.

In particular, the thermal insulation is obtained by the use of per se known polyurethane materials, the liquid components of which are separately injected into the respective hollow spaces of the body and door by means of conventional injector appliances located adjacent the conveyor belt, causing said liquid components to polymerize in a foaming process, the resulting foam distributing itself so as to completely fill the hollow spaces.

For achieving a reproducible and satisfactory foam insulation of such refrigerators without any defects in the thermal insulation of these appliances, the respective appliances and equipment should always and for the full duration of the foaming process operate under the same operative and ambient conditions, and on the other hand the injection zones of the bodies and doors of the respective refrigerators should be selected so as to ensure the effective penetration and distribution of the polyurethane material in the hollow spaces of the doors and bodies.

In practical use, however, the operative and ambient conditions of these injection devices are frequently variable during the injection and foaming process, while the injection zones to which the polyurethane material is supplied frequently present structural obstacles capable of preventing the penetration and correct distribution of the polyurethane material in the above described hollow spaces.

These circumstances may therefore be conducive to the occurrence of defects in the thermal insulation of the refrigerators, principally due to the creation of continuous or discontinuous voids in the polyurethane foam, or to the existence of locations whereat the material is not completely polymerized, resulting in so-called "limp foam". These defects result in a diminishing of the insulating efficiency of the foam material layer, and sometimes even in the creation of thermal bridges considerably prejudicing the usefulness of the finished appliance.

At the present time the existence of possible defects of the type described in the thermal insulation of refrigerators is being detected during manufacture of such appliances by trained operators by visual inspection and manual probing of those locations on the appliances whereat these defects are most likely to appear.

Although on the one hand inspections of this type permit practically any appliance with defects of this kind located at positions accessible to verification from outside to be identified, so that defective appliances can be rejected or corrective action may be taken to remedy the detected defects, this method is on the other hand not sufficiently reliable as it does not permit thorough examination of all locations of the thermal insulation structure to thereby detect defective zones possibly enclosed within the insulating structure or otherwise difficult to be located by the procedure as outlined above.

It would therefore be helpful, and is in fact an object of the present invention, to provide an apparatus for monitoring or inspecting the thermal insulation of electric household appliances such as refrigerators, capable of immediately and automatically detecting the existence of any defects of any nature and size in the insulation during the manufacture of such appliances, to thereby achieve a comprehensive quality control of all appliances so manufactured and to permit any defective appliances to be rejected or such defects to be remedied.

This monitoring or inspection apparatus is substantially based on the employ of at least one conventional thermographic device for the detection of thermal images produced by the thermal insulation of refrigerators, and on the comparison of encoded data obtained by means of such devices to other encoded data corresponding to optimum functional conditions of the thermal insulation, so that this comparison permits the existence of any defects in the thermal insulation to be directly detected.

This detection method with the aid of thermographic images is at present employed for the inspection of existing thermal insulations of any kind, and is based on the detection by a thermographic device of heat radiation passing through the insulation and produced by a suitable separate heat source.

The thus obtained thermographic images are made visible on the screen of a monitor associated to the apparatus, and are composed of colours of varying intensity indicative of defective areas and zones of different density of the thermal insulation.

The present inspection apparatus is thus operable to produce thermographic images of the insulation by making use of the heat radiation produced by the insulation itself during the foaming process as an effect of the chemical reaction, instead of employing the radiation produced by a separate heat source as in prior art.

These and other objects are attained according to the invention by an apparatus for inspecting the thermal insulation of electric household appliances, in particular refrigerators, to be employed in combination with a plant for the manufacture of such appliances, comprising foam generating means for forming the thermal insulation of said appliances by the employ of polyurethane or similar materials, and conveyor means for said appliances, said apparatus including at least one thermographic device associated to a monitor or the like of conventional type operable to display and inspect thermographic images of the thermal insulation.

This inspection apparatus is characterized by additionally comprising at least a per se known control and processing unit containing a series of encoded reference informations corresponding to a correct formation of the thermal insulation of every model of the electric household appliances to be produced, said control and processing unit being connected to said thermographic device, to said conveyor means and to at least one per se known input unit operable to select said encoded reference informations corresponding to the model of an electric household appliance to be actually produced, and to introduce said encoded informations into said control and processing unit for comparison thereof to other encoded informations provided by said thermographic device and corresponding to the thermographic images detected thereby as a result of the exothermic reaction of the material of the thermal insulation during the foaming process, said control and processing unit being adapted in response to said comparison to produce encoded response information for controlling said conveyor means.

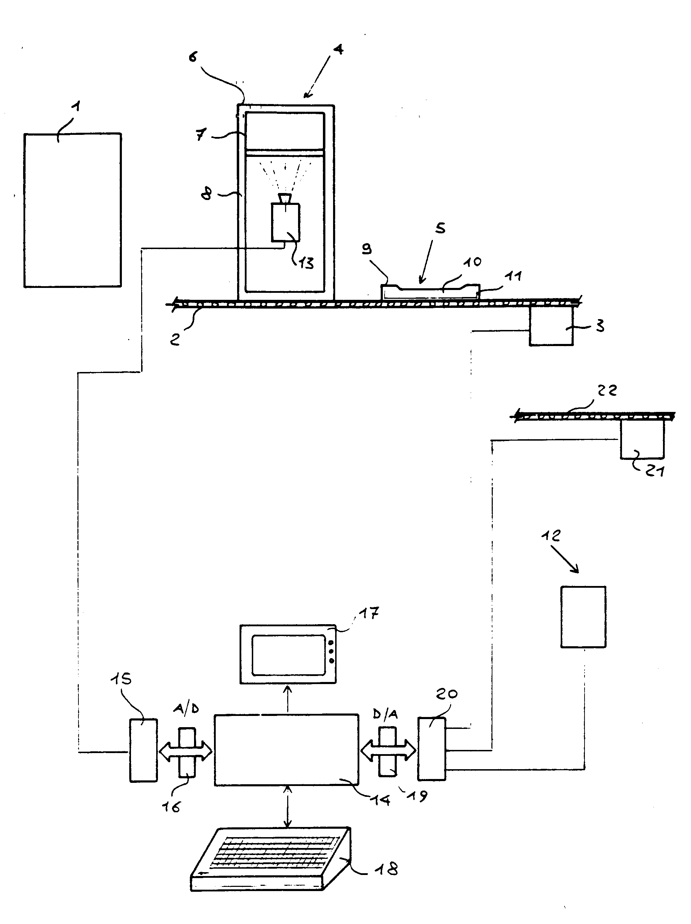

The characteristics of the invention will become more clearly evident from the following description, given by way of example with reference to the accompanying drawing, the only figure which shows a diagrammatical illustration of the monitoring and inspection apparatus according to the invention as employed in combination with a conventional plant for the manufacture of refrigerators for domestic use.

With reference to the drawing, there is shown a novel apparatus for monitoring or inspecting the thermal insulation of electric household appliances, in the present example refrigerators, being assembled in a manufacturing plant comprising at least one conventional device 1 for forming the thermal insulation of the refrigerators by the injection of the components of a polyurethane foam or the like, and a conveyor belt 2 of conventional type.

Conveyor belt 2 is adapted to perform a continuous advance movement with the aid of diagrammatically indicated, per se known power transmission means 3 for conveying the main components of individual refrigerators, namely, a housing body 4 and a door 5, to be subsequently assembled.

Housing body 4 is composed in the known manner of a substantially rectangular box-shaped outer housing 6 formed of metal sheet and having dimensions which may vary from one refrigerator model to the other, said outer housing 6 being open at its front side and adapted to contain an inner casing 7 made of a conventional plastic material and being dimensioned to be readily nestable in outer housing body 6 so as to leave a hollow space 8 therebetween to be filled with a thermally insulating foam material.

Door 5 is likewise of substantially rectangular shape and composed of a metal sheet outer panel 9 and an inner panel 10 made of a plastic material and adapted to be joined to outer panel 9 so as to leave a hollow space 11 therebetween to be filled with an insulating foam material.

As an alternative, the transport and assembly of the component elements of the refrigerators may take place on a completely automatized assembly line comprising the required mechanical handling and processing equipment 12 of a per se known type.

The monitoring or inspection apparatus according to the invention comprises at least one conventional thermographic device 13 such as a pyroelectric television camera, a pyrometer or a similar sensor adapted to detect thermographic images of the thermal insulation in a manner permitting the condition or structure thereof to be directly evaluated on the base of the exothermic reaction of the material of the insulation during the foaming process.

The spectral sensitivity of the television camera or similar sensor lies preferably within the range of infrared radiation with a wavelength corresponding to the infrared radiation permeability of the plastic materials employed in the construction of the housing bodies and doord of the refrigerators, so as to permit well defined thermographic images of the insulation to be obtained.

The thermographic device 13 is connected to an electric power supply and disposed at a suitable location for the inspection of the thermal insulation of the refrigerators placed on conveyor belt 2.

The thermographic device is also adapted to be disposed at varying orientations with respect to the body and door of each refrigerator so as to be able to selectively and accurately scan all areas of the thermal insulation of these elements whereat defects are most likely to occur during the manufacture process.

As evident from the drawing, the thermographic device is used to produce the above-mentioned thermographic images by direeting it exclusively towards respective portions of said housing body and said door made of a plastic material or another material of low thermal conductivity, whereat there is a minimum distribution of heat on the surface as compared to the distribution of heat on a metal surface.

The present monitoring or inspection apparatus further includes at least one control and processing unit 14 comprising a microcomputer, a personal computer or a similar control and processing device of conventional type, unit 14 being connected to thermographic device 13 through at least one interface 15 and an analog-digital converter 16 of conventional type.

Control and processing unit 14 is used to store encoded informations in digital form corresponding to reference heat-distribution maps of the thermal insulation of all refrigerators to be manufactured.

In particular, each such heat distribution map is experimentally obtained by scanning a number of sample refrigerators, and corresponds to the condition in which the thermal insulation of such refrigerators is formed in the correct manner, without any defective areas, and under pre-established operating and ambient conditions.

The control and processing unit may also be connected to at least one monitor 17 of conventional type for the visual display of the thermographic images generated by the above specified thermographic device, and is further connected to at least one input unit 18 in the form for instance of a keyboard or another periphery device of a per se known type, for instance a bar code scanner.

Input unit 18 serves the purpose of selecting the encoded informations corresponding to the respective reference heat distribution map associated to the refrigerator model to be actually manufactured, and to enter these informations into control and processing unit 14, the latter being operable to compare the respective reference heat distribution map to the heat distribution map obtained from each refrigerator being manufactured, in the manner to be described.

In addition, input unit 18 may also serve for entering further reference heat distribution maps in encoded form into control and processing unit 14, whenever additional models of refrigerators or other electric household appliances are to be manufactured.

On scanning selected areas of the thermal insulation of the housing body or the door of a refrigerator being manufactured, thermographic device 14 generates encoded informations in analogue form corresponding to the respective heat distribution map, these informations being converted to the digital for by analogue-digital converter 16 and subsequently entered into control and processing unit 14. The thermographic image or map may subsequently be visually displayed on monitor 17.

Control and processing unit 14 compares the received encoded informations with the previously stored encoded informations corresponding to the reference heat distribution map to thereby verify whether the thermal insulation under inspection has been correctly formed and is free of structural defects which might impair its insulating efficiency.

If in practice this comparison of the respective encoded informations corresponding to the generated thermographic image to the stored reference heat distribution map reveals the existence of slight differences lying within a preestablished tolerance range for the correct formation of the thermal insulation, control and processing unit 14 generates encoded affirmative informations in digital form which are subsequently converted to analogue form by a digital-analogue converter 19 and applied to an interface 20 adapted to control power transmission 3 for the advance of conveyor belt 2.

As a result, the assembly of the refrigerator thus inspected is permitted to proceed.

If on the other hand the comparison of the encoded informations reveals the existence of differences not comprised within the pre-established tolerance range, control and processing unit 14 generates corresponding response informations adapted in the same manner as described above to control a further power transmission 21 associated to an auxiliary conveyor belt 22 for carrying the defective component to a separate station whereat the defective insulation may be completed, as by a further injection and foaming process or, if this is not possible, for carrying the defective component to a discard or reclamation station.

In a corresponding manner, if the refrigerator manufacturing plant is composed of automatized handling and processing equipment 12 and includes further equipment for automatized assembly instead of the described conveyor belts, control and processing unit 14 acts to control this equipment by the same criteria and to the same purpose as previously described.

The thus composed monitoring or inspection apparatus thus permits to reveal in a simple, immediate and automatic manner any faults or defects of the thermal insulation of the manufactured appliances to thereby obtain a total quality control of all such appliances and the highest degree of reliable operation of the manufacturing plant by enabling the manufacturer to repair or eliminate defective products.

The present monitoring and inspection apparatus may or course also be used in combination with plants for the manufacture of products other than those described above, for instance for the manufacture of acoustic or thermal insulating materials involving as an essential characteristic the development of an exothermic reaction during the manufacturing process.

It is finally to be noted that the monitoring and inspection apparatus according to the invention may be provided with a plurality of thermographic devices 13 selectively connectable to the control and processing unit by per se known means, for instance a multiplexer or the like, and directed onto different areas of the thermal insulation of one or several appliances or products being manufactured.

## Claims

1. Apparatus for monitoring or inspecting the thermal insulation of electric household appliances, particularly refrigerators, to be used in combination with a plant for the manufacture of such appliances, comprising means (1) for forming the thermal insulation of such appliances by the employ of polyurethane foam materials or the like and including conveyor means (2, 12, 22) for transporting said appliances, said apparatus comprising at least one thermographic device (13) optionally associated to a monitor (17) of conventional type for generating thermographic images of said thermal insulation, characterized by comprising at least one control and processing unit (14) of a per se known type containing a series of encoded reference informations corresponding to the correct formation of the respective thermal insulation of each model of electric household appliances to be manufactured, said control and processing unit (14) being connected to said thermographic device (13), to said conveyor means (2, 12, 22) and to at least one per se known input unit (18) operable to select the encoded reference informations corresponding to the model of the electric household appliance to be actually manufactured and to enter the respective encoded informations into said control and processing unit (14) for comparison to other encoded informations generated by said thermographic device (13) and corresponding to thermographic images scanned by the latter in response to the exothermic reaction of the material of said thermal insulation during the foaming process, said control and processing unit (14) being adapted in response to said comparison to generate encoded response information for the control of said conveyor means (2,12,22).

2. Apparatus according to claim 1,characterized in that said thermographic device (13) is adapted to be oriented in different directions and to be directed exclusively towards portions made of plastic materials or other materials of medium or low thermal conductivity and enclosing said thermal insulation of said electric household appliances.

3. Apparatus according to claim 1, characterized in that said control and processing unit (14) is connected respectively to said thermographic device (13) and to said conveyor means (2, 12, 22) through at least a first and a second interface (15, 19) of conventional type optionally associated to a respective per se known analogue-digital converter (16, 20),said control and processing unit (14) being additionally connected through said second interface (19) to auxiliary conveyor means (22) adapted to convey defective appliances apart for their repair or substitution, said control and processing unit (14) being adapted to control the actuation of said conveyor means (2, 12) or of said auxiliary conveyor means (22), respectively, in response to whether or not said encoded informations resulting from said comparison lie within a pre-established tolerance range.

4. Apparatus according to any of the preceding claims, characterized in that it may include a plurality of said thermographic devices (13) adapted to be selectively connected to said control and processing unit (14) by per se known means.

## Revendications

1. Dispositif pour contrôler ou examiner l'isolation thermique d'appareils électroménagers, notamment de réfrigérateurs, utilisé en coopération avec une installation pour la fabrication de ces appareils, comprenant des moyens (1) pour former l'isolation thermique de ces appareils par l'emploi de matériaux à base de mousse de polyuréthanne ou l'analogue et comprenant des moyens transporteurs (2,12,22) pour transporter ces appareils, ce dispositif comprenant au moins un dispositif thermographique (13) facultativement associé à un moniteur (17) de type classique pour produire des images thermographiques de cette isolation thermique, caractérisé en ce qu'il comprend au moins une unité de commande et de traitement (14) d'un type connu en soi contenant une série d'informations de référence codées correspondant la formation correcte de l'isolation thermique respective de chaque modèle d'appareils électroménagers à fabriquer, cette unité de commande et de traitement (14) étant raccordée au dispositif thermographique (13), aux moyens transporteurs (2,12,22) et à au moins une unité d'entrée connue en soi (18) servant à sélectionner les informations de référence codées correspondant au modèle de l'appareil électroménager à fabriquer dans la réalité, et à entrer les informations codées respectives dans cette unité de commande et de traitement (14) à des fins de comparaison avec d'autres informations codées procurées par ce dispositif thermographique (13) et correspondant aux images thermographiques fournies par ce dernier en réponse à la réaction exothermique du matériau de l'isolation thermique pendant l'opération de moussage, cette unité de commande et de traitement (14) étant adaptée, en réponse à cette comparaison, pour produire des informations de réponse codées pour la commande des moyens transporteurs (2,12,22).

2.  Dispositif selon la revendication 1, caractérisé en ce que le dispositif thermographique (13) est adapté pour être orienté dans différentes directions et pour être dirigé exclusivement vers des portions en matière plastique ou en d'autres matériaux de conductibilité thermique moyenne ou faible et enfermant l'isolation thermique de ces appareils électroménagers.

3.  Dispositif selon la revendication 1, caractérisé en ce que l'unité de commande et de traitement (14) est raccordée respectivement au dispositif thermographique (13) et aux moyens transporteurs (2,12,22) par l'intermédiaire d'au moins une première interface (15) et une deuxième interface (19) de type conventionnel facultativement associées à un convertisseur analogique/numérique respectif connu en soi (16,20), l'unité de commande et de traitement (14) étant en outre raccordée par l'intermédiaire de la deuxième interface (19) à des moyens transporteurs auxiliaires (22) adaptés pour transporter les appareils défectueux à des fins de réparation ou de remplacement, l'unité de commande et de traitement (14) étant adaptée pour commander l'actionnement de ces moyens transporteurs (2,12) ou de ces moyens transporteurs auxiliaires (22) respectivement, selon que les informations codées résultant de cette comparaison se trouvent à l'intérieur d'une plage de tolérances préétablie ou non.

4.  Dispositif selon l'une des revendications précédentes, caractérisé en ce qu'il peut comprendre une multiplicité de ces dispositifs thermographiques (13) adaptés pour être sélectivement raccordés à l'unité de commande et de traitement (14) par des moyens connus par eux-mêmes.

**Patentansprüche**

1.  Vorrichtung zur Überwachung oder Prüfung der thermischen Isolierung von elektrischen Haushaltsgeräten, insbesondere von Kühlschränken, die in Kombination mit einer Anlage zum Herstellen solcher Vorrichtungen benutzt wird, enthaltend eine Einrichtung (1) zum Herstellen der thermischen Isolierung derartiger Geräte durch die Verwendung von Polyurethan-Schaummaterial oder ähnlichem und enthaltend eine Fördereinrichtng (2, 12, 22) zum Transportieren der Geräte, wobei die Vorrichtung mindestens ein thermographisches Gerät enthält, das wahlweise mit einem Monitor (17) in Verbindung gebracht werden kann, der herkömmlicher Art ist, zum Erzeugen von thermographischen Bildern der thermischen Isolierung, dadurch gekennzeichnet, daß sie enthält: mindestens eine Steuerungs- und Verarbeitungseinheit (14) einer an sich bekannten Art, enthaltend eine Reihe von codierten Bezugsinformationen, die der korrekten Herstellung der jeweiligen thermischen Isolierung jedes Modells eines elektrischen Haushaltsgeräts, das hergestellt werden soll, entsprechen, wobei die Steuer- und Verarbeitungseinheit (14) mit dem thermographischen Gerät (13), der Fördereinrichtung (2, 12, 22) und wenigstens einer an sich bekannten Eingabeeinheit (18) verbunden ist, die in der Lage ist, die codierten Bezugsinformationen entsprechend dem Modell des elektrischen Haushaltsgeräts, das tatsächlich hergestellt wird, auszuwählen, und um die jeweiligen codierten Informationen in die Steuer- und Verarbeitungseinheit (14) einzugeben zum Vergleich mit anderen codierten Informationen, die durch das thermographische Gerät (13) erzeugt werden, und entsprechend der thermographischen Bilder, die durch das letztere in Reaktion auf die exotherme Reaktion des Materials der thermischen Isolierung während des Schaumprozesses abgetastet werden, wobei die Steuer- und Verarbeitungseinheit (14) dazu eingerichtet ist, als Reaktion auf den Vergleich, um codierte Rückinformationen für die Steuerung der Fördereinrichtung (2, 12, 22) zu erzeugen.

2. Vorrichtung nach Anspruch 1, dadurch gekennzeichnet, daß das thermographische Gerät (13) dazu eingerichtet ist, in verschiedenen Richtungen orientiert zu werden und ausschließlich gegen Teile, die aus plastischem Material oder anderen Materialien einer mittleren oder niedrigen thermischen Leitfähigkeit bestehen, und die thermischen Isolierung des elektrischen Haushaltsgeräts umschließen, gerichtet zu werden.

3. Vorrichtung nach Anspruch 1, dadurch gekennzeichnet, daß die Steuer- und Verarbeitungseinheit (14) jeweils mit dem thermographischen Gerät (13) und mit der Fördereinrichtung (2, 12, 22) durch wenigstens eine erste und eine zweite Schnittstelle (15, 16) herkömmlicher Art verbunden ist, die je nach Bedarf mit einem jeweils an sich bekannten analog-digital Umwandler (16, 20) in Verbindung gebracht wird, wobei die Steuer- und Verarbeitungseinheit (14) zusätzlich durch die zweite Schnittstelle (19) mit der Hilfsfördereinrichtung (22) verbunden ist, die dazu eingerichtet ist, fehlerhafte Geräte außer zum Reparieren oder zum Ersetzen zu befördern, wobei die Steuer- und Verarbeitungseibnheit (14) dazu eingerichtet ist, die Aktivierung der Fördereinrichtung (2, 12) oder der Hilfsfördereinrichtung (22) jeweils zu steuern in Reaktion darauf ob oder ob nicht die codierten Informationen, die aus dem Vergleich hervorgehen, innerhalb eines vorhergebildeten Toleranzbereichs liegen.

4. Vorrichtung nach einem der vorangegangenen Ansprüche, dadurch gekennzeichnet, daß es eine Vielzahl von thermographischen Geräten (13) enthalten kann, die eingerichtet sind, wahlweise mit der Steuer- und Verarbeitungseinheit (14) durch eine an sich bekannte Einrichtung verbunden zu werden.